# DEMANDE DE BREVET EUROPEEN

(11) **EP 1 396 400 A1**
(43) Date de publication de la demande: **10.03.2004**
(21) Numéro de dépôt: 03291967.2
(22) Date de dépôt: 06.08.2003
(51) Int. Cl.: B60R 25/02

(54) **Dans un véhicule, circuit de commande d'un dispositif sécuritaire**

(30) Priorité: 04.09.2002 FR 0210909
(71) Demandeur: Renault s.a.s., 92100 Boulogne Billancourt (FR)
(72) Inventeur: France, Olivier, 78170 La Celle Saint Cloud (FR); Saint-Leger, Gérard, 78000 Versailles (FR)
(74) Mandataire: Davies, Owen Robert Treharne

(57) **Abrégé**

L'invention concerne un circuit de commande d'un dispositif sécuritaire (ET0, C0, F0) piloté en fonction d'un signal de validation (VAL) représentatif de l'état d'un premier dispositif annexe (C1, F1) activé par un premier signal de commande (COM1).

Selon l'invention, le circuit de commande comprend également un deuxième dispositif annexe (ET2, C2, F2) qui, lorsqu'il est activé par un deuxième signal de commande (/COM1) complémentaire du premier signal de commande (COM1), fixe un potentiel du signal de validation (VAL) à un potentiel de référence.

Application aux véhicules automobiles.

## Description

L'invention concerne un circuit de commande d'un dispositif sécuritaire, notamment dans un véhicule automobile. L'invention est notamment intéressante pour la commande d'un verrou mécanique à commande électronique pour un véhicule sans clé, et en particulier pour la commande d'un verrou de la colonne de direction.

Dans le domaine de l'automobile, les normes européennes imposent aujourd'hui un verrouillage de la colonne de direction lorsque le moteur est à l'arrêt, et un déverrouillage de la dite colonne lorsque le moteur tourne. Ainsi, l'utilisation du volant lorsque le véhicule est à l'arrêt n'a plus d'incidence sur la colonne de direction. Ceci permet notamment d'augmenter la protection des véhicules contre le vol.

Sur les véhicules avec clé de contact, le déverrouillage et le verrouillage de la colonne de direction sont réalisés mécaniquement par la rotation de la clé dans le contacteur démarreur, et il n'est pas possible de verrouiller la colonne de direction lorsque la clé est dans une position telle que le moteur tourne.

Dans le brevet FR 2801263, un verrou électronique est proposé pour une colonne de direction d'un véhicule. Il est piloté par un circuit de commande via quelques transistors de commande.

Un objet de la présente invention est de fournir un circuit de commande d'un dispositif de sécurité amélioré pour un véhicule.

Ainsi, l'invention concerne dans un véhicule un circuit de commande d'un dispositif sécuritaire piloté en fonction d'un signal de validation VAL représentatif de l'état d'un premier dispositif annexe activé par un premier signal de commande.

Selon l'invention, le circuit comprend également un deuxième dispositif annexe qui, lorsqu'il est activé par un deuxième signal de commande complémentaire du premier signal de commande, fixe un potentiel du signal de validation à un potentiel de référence.

En d'autres termes, selon l'invention, pour fixer la valeur du signal de validation lorsqu'il est actif, on utilise une charge commandée par un deuxième signal complémentaire du premier signal de commande qui active le premier dispositif annexe. La valeur du signal de validation VAL est ainsi garantie lorsque le premier dispositif annexe est inactif, et le dispositif sécuritaire alors peut être activé. Inversement, lorsque le premier dispositif annexe est actif, le signal de validation VAL est inactif et le dispositif sécuritaire ne peut pas être activé.

Dans un exemple, le premier dispositif annexe comprend un premier dispositif piloté, tel qu'un moteur thermique du véhicule, et un premier circuit d'alimentation commandé du dit moteur thermique.

Selon un premier mode de réalisation, le deuxième dispositif annexe comprend notamment une charge commandée qui présente une impédance finie lorsqu'elle est commandée par le deuxième signal de commande, et qui est un circuit ouvert sinon.

Ainsi, la charge commandée n'est pas active et ne consomme pas d'énergie lorsque le premier dispositif annexe est actif, lorsqu'il est alimenté en énergie (par exemple, moteur tournant). Par contre, lorsque le premier dispositif annexe est inactif, lorsqu'il n'est plus alimenté en énergie, alors la charge annexe est activée et écoule vers la masse les charges résiduelles présentes sur le lien électrique entre le premier dispositif annexe et le dispositif sécuritaire, ce qui permet de garantir la valeur du signal de validation.

Selon un deuxième mode de réalisation, le deuxième dispositif annexe comprend un deuxième dispositif piloté et un deuxième circuit d'alimentation associé qui, si le deuxième signal de commande est actif, écoule vers la masse les charges résiduelles présentes sur le signal de validation, et sinon, fournit une énergie au dispositif piloté en fonction d'un troisième signal de commande, le deuxième circuit d'alimentation formant la charge commandée.

De préférence, le deuxième circuit annexe est un circuit préexistant dans le véhicule. Par exemple, le deuxième dispositif piloté est un équipement intérieur du véhicule, et le deuxième dispositif d'alimentation est un circuit d'alimentation commandé du dit équipement intérieur. L'équipement intérieur peut être par exemple un dispositif de chauffe-vitre, un dispositif de lève- vitre, un dispositif d'éclairage, etc. Ainsi, la mise en oeuvre de l'invention n'entraîne pas de surcoût lors de la réalisation ou de l'utilisation du véhicule.

Le dispositif sécuritaire comprend, d'une part, un circuit logique, pour combiner le signal de validation et un troisième signal de commande pour produire un signal résultant, et, d'autre part, un troisième circuit d'alimentation et un troisième dispositif piloté, le troisième circuit d'alimentation produisant, s'il reçoit le signal résultant, une énergie au troisième dispositif piloté.

Le troisième dispositif piloté est un verrou mécanique à commande électronique, par exemple un verrou d'une colonne de direction du véhicule.

La présente invention fournit aussi un procédé pour commander un dispositif sécuritaire (ET0, C0, F0) dans un véhicule, le procédé comprenant les étapes :
- activant par un premier signal de commande (COM1) un premier dispositif annexe (C1, F1) ;
- pilotant un circuit de commande en fonction d'un signal de validation (VAL) représentatif de l'état dudit premier dispositif ;
- activant par un deuxième signal de commande (/COM1) complémentaire du premier signal de commande (COM1) un deuxième dispositif annexe (ET2, C2, F2) ; et
- fixant un potentiel du signal de validation (VAL) à un potentiel de référence lorsque ledit deuxième dispositif est activé par ledit deuxième signal de commande.

Enfin, l'invention concerne également un véhicule sans clé comprenant un circuit de commande tel que décrit ci-dessus.

La présente invention sera mieux comprise à l'étude d'un mode de réalisation pris à titre d'exemple nullement limitatif et illustré par les dessins annexés, sur lesquels :
- la figure 1 est un schéma électronique d'un circuit de commande, et
- la figure 2 est un schéma électronique d'un circuit de commande conforme de la figure 1 modifiée.

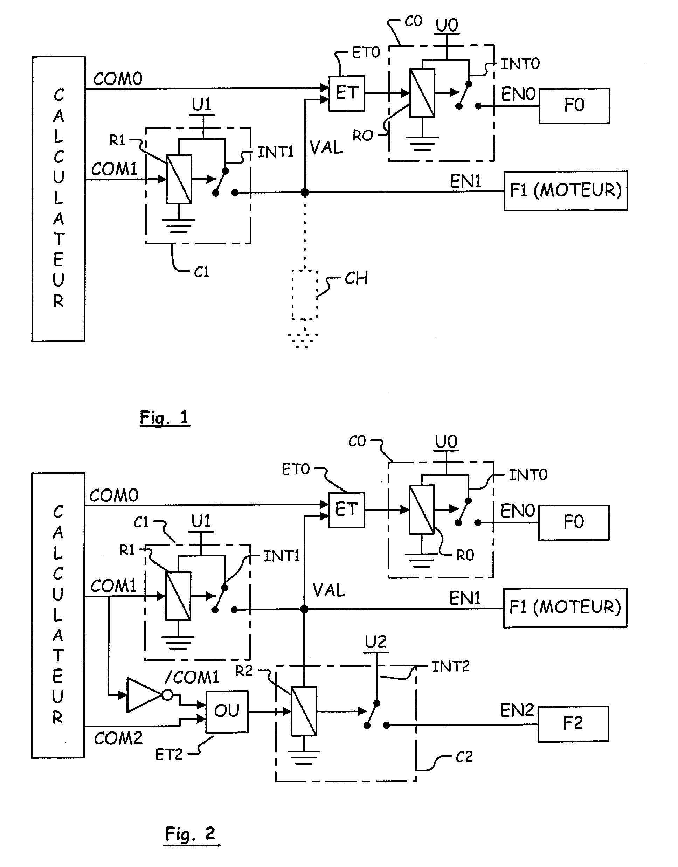

Pour piloter un dispositif F1 (figure 1), par exemple le moteur thermique, le calculateur central produit un signal de commande COM1 à un dispositif d'alimentation C1 du dispositif F1 à piloter. Lorsqu'il reçoit le signal COM1, le circuit C1 fournit une énergie EN1 au dispositif F1 associé, énergie suffisante pour son fonctionnement normal ; le dispositif F1 est activé lorsqu'il reçoit l'énergie EN1.

Le dispositif d'alimentation C1 peut comprendre un interrupteur commandé INT1 et un relais R1 de commande. Le relais R1 est commandé par le signal COM1, et il pilote l'ouverture et la fermeture de l'interrupteur INT1. L'interrupteur INT1 a une entrée connectée à l'accumulateur principal du véhicule et une sortie connectée à une entrée d'alimentation du dispositif F1. Ainsi, lorsqu'il reçoit le signal COM1, le relais R1 ferme l'interrupteur INT1 : le dispositif F1 reçoit l'énergie EN1, dans l'exemple égale à une énergie U1 fonction de l'énergie U fournie par l'accumulateur central.

Cependant, pour des raisons de sécurité notamment et pour certains dispositifs du véhicule, il est préférable de s'assurer qu'un dispositif piloté F0 ne peut pas être activé à un moment où son activation présente un risque, par exemple lorsqu'un premier dispositif F1 est déjà actif. C'est le cas par exemple du verrou de la colonne de direction, qui ne doit pas être activé soudainement lorsque le moteur tourne.

Pour pallier ce problème, on combine un signal de commande COMO d'un circuit d'alimentation C0 du dispositif F0 avec un signal de validation VAL représentatif de l'état du dispositif F1. Le signal de commande COM0 et le signal de validation VAL sont combinés (dans l'exemple de la figure 1 par un ET logique ET0) et doivent tous deux être actifs pour commander le circuit d'alimentation C0 qui fournit l'énergie EN0 au dispositif F0. Ainsi, si le signal VAL n'est pas actif, le dispositif F0 ne peut être activé. Dans l'exemple de la figure 1, le circuit d'alimentation C0 est réalisé de la même manière que le circuit C1.

Dans un exemple, le dispositif F0 est le verrou de la colonne de direction et le signal VAL est une information sur l'état du moteur F1 : le signal VAL est actif si le moteur est arrêté. De cette façon, le verrou de la colonne de direction ne peut pas être activé tant que le moteur thermique tourne.

On peut utiliser (non représenté figure 1) comme signal de validation VAL le courant produit par un alternateur relié au moteur thermique par un lien mécanique, par exemple une courroie. Lorsque le moteur thermique est à l'arrêt, le courant produit par l'alternateur est nul, le signal VAL est donc actif et le verrou peut être activé. Il est possible que cette solution ne soit pas tout à fait satisfaisante car, en cas de rupture du lien mécanique entre le moteur et l'alternateur, l'alternateur produit un courant nul (donc un signal VAL actif) même si le moteur tourne.

On peut d'utiliser comme signal VAL le signal produit par le circuit d'alimentation C1 du dispositif F1. Le signal VAL est ainsi à un potentiel représentatif de l'énergie EN1 fournie au dispositif F1 par le circuit C1. Le circuit C1 fournit au dispositif F1 l'énergie EN1 (fonction en pratique de l'énergie fournie par l'accumulateur principal du véhicule) lorsqu'il reçoit un signal COM1 du calculateur central, et il ne fournit pas d'énergie dans le cas contraire (sortie du circuit C1 à haute impédance). Le signal VAL est donc inactif lorsque le circuit C1 fournit l'énergie EN1 au dispositif F1 (c'est-à-dire dans l'exemple lorsque le moteur tourne), et le signal VAL est actif dans le cas contraire. Cependant, lorsque le circuit C1 n'est plus commandé par le calculateur central, des charges électriques résiduelles présentes sur le lien électrique entre le circuit C1 et le dispositif F1 ont pour conséquence une valeur incertaine du signal VAL, qui n'est pas admissible.

Une solution, dans ce cas, est d'utiliser une charge annexe CH (représentée en pointillés sur la figure 1) pour fixer la valeur du potentiel du signal VAL lorsque le circuit C1 n'est plus commandé. La charge annexe CH est connectée entre la sortie du circuit C1 et la masse. Ainsi, lorsque le signal COM1 est désactivé, le circuit C1 ne fournit plus d'énergie au dispositif F1 et la charge annexe CH permet l'écoulement vers la masse des charges électriques résiduelles présentes sur le lien électrique entre le circuit C1 et le dispositif F1. Le potentiel du signal VAL est alors immédiatement ramené à une valeur certaine, égale à 0 dans l'exemple de la figure 1.

Cette dernière solution présente l'avantage de produire un signal de validation VAL dont la valeur est certaine, et qui peut être utilisé en toute sécurité pour piloter d'autres dispositifs du véhicule, et notamment un dispositif sécuritaire tel que le verrou de la colonne de direction.

Cependant, pour mettre en oeuvre cette dernière solution, il est important de prévoir la réalisation de la charge annexe lors du développement et de la réalisation du circuit électrique global du véhicule. Par ailleurs, la dite charge annexe a pour seule utilisation la garantie d'une valeur certaine du signal VAL. Enfin, la dite charge annexe consomme de l'énergie en parallèle du dispositif F1. Tout ceci entraîne un surcoût lors de la réalisation et de l'utilisation du véhicule.

Un mode préféré de réalisation de l'invention a pour but de pallier ces inconvénients, en proposant notamment une solution pour produire un signal de validation représentatif de manière certaine de l'état d'un dispositif du véhicule, par exemple le moteur thermique, sans entraîner de surcoût lors de sa mise en oeuvre.

Le circuit de commande de la figure 2 comprend, de même que le circuit de commande de la figure 1, un dispositif sécuritaire F0 piloté par un circuit d'alimentation C0. Le circuit C0 est commandé par un signal résultant d'une combinaison d'un signal de commande COM0 fourni par le calculateur central et d'un signal de validation VAL. Le signal VAL est représentatif de l'état d'un premier dispositif annexe, qui comprend un premier circuit d'alimentation C1 et un premier dispositif piloté F1 (ex : le moteur thermique). Le circuit C1 fournit, s'il reçoit un signal de commande COM1, une énergie EN1 au dispositif F1 et le circuit C1 produit, sinon, le signal VAL. Le circuit C1 comprend un premier interrupteur INT1 dont un premier pôle est relié à un accumulateur central du véhicule et dont un deuxième pôle est relié à une entrée d'alimentation du dispositif F1. Le circuit C1 comprend également un premier relais R1 connecté entre l'accumulateur central et une masse du circuit. Le relais R1 ferme ou ouvre l'interrupteur INT1 en fonction du premier signal de commande COM1.

Le circuit de la figure 2 comprend également un deuxième dispositif annexe, qui comprend un deuxième circuit d'alimentation C2 et un deuxième dispositif piloté F2 (ex : un accessoire du véhicule). S'il reçoit le deuxième signal de commande /COM1 (actif) complémentaire du premier signal de commande COM1 (/COM1 est actif lorsque COM1 est inactif), le circuit C2 est activé et il écoule vers la masse les charges présentes sur le lien électrique entre le circuit C1 (qui est désactivé puisque COM1 est inactif) et le circuit F1 : le potentiel du signal VAL est ainsi ramené au potentiel de référence de la masse.

Le circuit C2 comprend un interrupteur INT2 dont un premier pôle est relié à l'accumulateur central et dont un deuxième pôle est relié à une entrée d'alimentation du dispositif F2. Le circuit C2 comprend également un relais R2 connecté entre d'une part le point commun du circuit C1 et du dispositif F1 et d'autre part la masse du circuit. Le relais R2 ferme ou ouvre l'interrupteur INT2 en fonction du signal /COM1 et du signal COM2, combinés par un OU logique ET2. Le relais R2 est ainsi activé soit lorsque le signal COM2 est actif (pour la commande du dispositif F2), soit lorsque le signal /COM1 est actif (c'est-à-dire lorsque le moteur F1 n'est pas commandé).

Si le signal COM1 est actif (dispositif F1 en fonctionnement), alors /COM1 est inactif. Dans ce cas, le relais R2 est actif et il ferme ou ouvre l'interrupteur INT2 en fonction du signal COM2 fourni par le calculateur. L'énergie EN2 est alors fournie ou pas au dispositif F2, selon le signal COM2.

Inversement, si le signal COM1 est inactif, alors le dispositif F1 n'est plus alimenté (ex : moteur à l'arrêt) et le signal /COM1 est actif. Dans ce cas, le relais R2 est actif mais il ne se comporte pas comme interrupteur. Il se comporte ici comme une impédance : il écoule vers la masse les charges électriques résiduelles en sortie du circuit C1. A noter qu'ici, même si le signal COM2 devient actif, le relais R2 ne reçoit pas suffisamment d'énergie sur son pôle positif et en conséquence il ne ferme pas l'interrupteur INT2 : le dispositif F2 ne reçoit pas d'énergie.

Parmi les avantages de la présente invention, pour fixer la valeur du signal de validation lorsqu'il est actif, on utilise une charge commandée par un deuxième signal complémentaire du premier signal de commande qui active le premier dispositif annexe. La valeur du signal de validation VAL est ainsi garantie lorsque le premier dispositif annexe est inactif, et le dispositif sécuritaire alors peut être activé. Inversement, lorsque le premier dispositif annexe est actif, le signal de validation VAL est inactif et le dispositif sécuritaire ne peut pas être activé. Ainsi, en utilisant le circuit de la présente invention, certains aspects de la sécurité du véhicule sont améliorés pour un faible coût.

## Revendications

1. Dans un véhicule, circuit de commande d'un dispositif sécuritaire (ET0, C0, F0) piloté en fonction d'un signal de validation (VAL) représentatif de l'état d'un premier dispositif annexe (C1, F1) activé par un premier signal de commande (COM1),
le circuit comprenant également un deuxième dispositif annexe (ET2, C2, F2) qui, lorsqu'il est activé par un deuxième signal de commande (/COM1) complémentaire du premier signal de commande (COM1), fixe un potentiel du signal de validation (VAL) à un potentiel de référence.

2. Circuit selon la revendication 1, dans lequel le premier dispositif annexe comprend un premier dispositif piloté (F1) et un premier circuit d'alimentation (C1) qui, s'il reçoit le premier signal de commande (COM1), fournit une énergie (EN1) au premier dispositif piloté (F1), et qui, sinon, produit le signal de validation (VAL).

3. Circuit selon l'une des revendications 1 à 2, dans lequel le deuxième dispositif annexe comprend une charge commandée d'impédance finie lorsqu'elle est commandée par le deuxième signal de commande (/COM1), et équivalente à un circuit ouvert sinon.

4. Circuit selon la revendication 3, dans lequel le deuxième dispositif annexe comprend un deuxième dispositif piloté (F2) et un deuxième circuit d'alimentation (C2) associé qui, si le deuxième signal de commande (/COM1) est actif, écoule vers la masse les charges résiduelles présentes sur le signal de validation (VAL), et sinon, fournit une énergie au dispositif piloté (F2) en fonction d'un troisième signal de commande (COM2), le deuxième circuit d'alimentation (C2) formant la charge commandée.

5. Circuit selon la revendication 4, dans lequel le deuxième circuit d'alimentation (C2) comprend, d'une part, un deuxième interrupteur (INT2) dont un premier pôle est relié à une sortie d'énergie du premier circuit de commande et dont un deuxième pôle est relié à une entrée d'alimentation du deuxième dispositif piloté (F2), et, d'autre part, un deuxième relais (R2) connecté entre une sortie du premier dispositif de commande (C1) sur laquelle est disponible le signal de validation (VAL) et une masse du circuit, et qui :
- s'il reçoit le deuxième signal de commande (/COM1), écoule vers la masse les charges résiduelles présentes sur le signal de validation (VAL) et
- sinon, ferme ou ouvre le deuxième interrupteur (INT2) en fonction du troisième signal de commande (COM2).

6. Circuit selon l'une des revendications 2 à 5, dans lequel le premier dispositif piloté (F1) est un moteur thermique du véhicule, et le premier dispositif d'alimentation (C1) est un circuit d'alimentation commandé du dit moteur thermique.

7. Circuit selon l'une des revendications 5 à 7, dans lequel le deuxième dispositif piloté (F2) est un équipement intérieur du véhicule, et le deuxième dispositif d'alimentation (C2) est un circuit d'alimentation commandé du dit équipement intérieur.

8. Circuit selon la revendication 7, dans lequel l'équipement intérieur est un dispositif de chauffe-vitre, un dispositif de lève- vitre ou un dispositif d'éclairage.

9. Circuit selon l'une des revendications précédentes, dans lequel le dispositif sécuritaire comprend, d'une part, un circuit logique (ETO), pour combiner le signal de validation (VAL) et un troisième signal de commande (COM0) et produire un signal résultant, et, d'autre part, un troisième circuit d'alimentation (C0) et un troisième dispositif piloté (F0), le troisième circuit d'alimentation (C0) produisant, s'il reçoit le signal résultant, une énergie (EN0) au troisième dispositif piloté (FO).

10. Circuit selon la revendication 9, dans lequel le troisième dispositif piloté (F0) est un verrou électronique.

11. Circuit selon la revendication 10, dans lequel le troisième dispositif piloté (F0) est un verrou électronique d'une colonne de direction du véhicule.

12. Procédé pour commander un dispositif sécuritaire (ET0, C0, F0) dans un véhicule, le procédé comprenant les étapes :
activant par un premier signal de commande (COM1) un premier dispositif annexe (C1, F1) ;
pilotant un circuit de commande en fonction d'un signal de validation (VAL) représentatif de l'état dudit premier dispositif ;
activant par un deuxième signal de commande (/COM1) complémentaire du premier signal de commande (COM1) un deuxième dispositif annexe (ET2, C2, F2) ; et
fixant un potentiel du signal de validation (VAL) à un potentiel de référence lorsque ledit deuxième dispositif est activé par ledit deuxième signal de commande.

13. Véhicule sans clé comprenant un circuit de commande selon l'une des revendications 1 à 11 ou comprenant un circuit contrôlé par un procédé selon le revendication 12.
